# EUROPEAN PATENT SPECIFICATION

(11) **EP 3 926 791 B1**
(45) Date of publication and mention of the grant of the patent: **25.03.2026**
(21) Application number: 21179459.9
(22) Date of filing: 15.06.2021
(51) Int. Cl.: H02K 1/02, H02K 15/03, H02K 1/2788, H01F 1/08, H02K 1/2792, H01F 1/113, H01F 13/00, H01F 1/055

(54) **COOLING DEVICE FOR A MOTOR VEHICLE AND METHOD FOR FORMING A COOLING DEVICE FOR A MOTOR VEHICLE**
KÜHLVORRICHTUNG FÜR EIN KRAFTFAHRZEUG UND VERFAHREN ZUR HERSTELLUNG EINER KÜHLVORRICHTUNG FÜR EIN KRAFTFAHRZEUG
DISPOSITIF DE REFROIDISSEMENT POUR VÉHICULE A MOTEUR ET PROCÉDÉ DE FABRICATION D'UN DISPOSITIF DE REFROIDISSEMENT POUR VÉHICULE À MOTEUR

(30) Priority: 16.06.2020 IT 202000014392
(43) Date of publication of application: 22.12.2021
(73) Proprietor: Baruffaldi S.p.A., 20067 Tribiano (MI) (IT)
(72) Inventor: RONA, Simone, 20067 Tribiano (MI) (IT)
(74) Representative: Raimondi, Margherita

(56) References cited:
- DE-A1- 102018 202 943
- JP-A- 2018 041 882
- JP-A- 2019 004 606
- US-A1- 2006 273 677
- US-A1- 2012 183 417
- US-A1- 2013 039 784
- US-A1- 2014 175 912
- US-A1- 2018 115 206
- US-A1- 2019 123 625

## Description

The present invention relates to a cooling device for a motor vehicle and a method for forming a cooling device for a motor vehicle.

Electric drive systems such as electric motors are electric machines which use the electromagnetic interaction forces which are generated between a magnetic field and a system of currents generated by an electric power at the input in order to generate a mechanical energy at the output, generally in the form of a rotational movement of a rotating element or rotor.

The present invention is intended for electric drive systems in which a stator interacts with a permanently magnetized rotor, and in which the rotor is arranged in a coaxial and radially external position with respect to the stator that is inserted inside it. In this position the rotor is defined as being external.

An external rotor for drives such as electric motors is generally in the form of a cup, that is as hollow cylindrical body which is closed at only one of its two bases by a circular plate which forms the front face thereof. During use, the stator is inserted coaxially and generally concentrically inside the external rotor,

The external rotors of this type are generally formed from a hollow metal cylinder on the inner side surface of which permanent magnets are mounted, for example by means of gluing; the metal cylinder with permanent magnets is closed at one of its bases by a metal plate which is involved in the dimensional design of the magnetic circuit. The external rotor therefore assumes the form of a metal cup with permanent magnets fixed onto the inner side surface of the cylindrical part. Examples of this kind of external rotor are known from DE10 2018 202943, which discloses a rotor cup made of iron to the inside of which a hollow cylindrical body is fixed, which is permanently magnetized using a Halbach technique. Further examples are known from US 2014-0175912 and JP 2019-4606.

The external rotors of this type are particularly costly and complex to produce since they require mechanical machining of the metal cup with removal of material, for example a turning operation, and the manual gluing (resulting in a high cost of the component) or automatic gluing of the permanent magnets inside the same (with a consequent high investment cost). In addition, such rotors are inevitably subject to imprecision in their final dimensional design, resulting in the need to calculate broader spacing tolerances of the component parts of the electric drive, in particular resulting in the need to leave bigger air gaps, usually greater than 1 mm, between stator and rotor. These bigger air gaps form a resistance in the magnetic circuit which adversely affects the passage of the flux and therefore the torque delivered by the electric motor.

Moreover, the glue is not distributed uniformly inside the metal cup and the consequent variable height of the single magnets causes imbalances of the rotor which must be corrected, during a following step, with further machining operations carried out on machine tools.

The use of electric drives with an external rotor and internal stator is particularly advantageous in the sector of cooling apparatus for motor vehicles, which comprises in particular cooling fans and recirculation pumps, since the configuration with external rotor does not limit the power of the electric drive in the manner of the configuration with internal rotor, it being possible to design the external rotor with dimensions also much greater than stator, therefore allowing the output of a high torque, according to the different cooling and lubrication requirements of the vehicle internal-combustion engines.

The technical problem which is posed therefore is that of providing an external rotor for electric drive systems, in particular for use in devices for cooling or lubricating the internal-combustion engine of vehicles, the manufacture of which is easier and/or more cost-effective.

In connection with this problem it is also desirable that the rotor should be able to maintain an adequate torque transmission performance for the operation, for example, of fans, including those with large dimensions.

It is also preferable that the rotor should be able to be produced with a high precision, allowing therefore the tolerances of the air gaps of the electric drive to be reduced, thereby improving the performance of the drive.

A further object of the present invention is to provide an external rotor which is particularly suitable for use in a device for transmission of the rotational movement to a fan for cooling the cooling liquid of motor vehicles, or a pump for recirculating the cooling liquid or lubricating oil of the internal-combustion engine of the vehicle.

A further problem dealt with by the present invention is that of providing a simplified method for the production of a cooling device for electric drives of the type described.

These technical problems are solved according to the present invention by a cooling device according to the features of claim 1 and a method for forming a cooling device according to claim 12.

With the rotor according to the invention it is possible to compensate for the lesser magnetic efficiency of the plastic-magnetic materials owing to the Halbach magnetization which is able to obtain a magnetic field measured at the centre of the pole which essentially reproduces a pure sinusoid and is therefore more efficient; also, the continuous structure of the rotor-magnet is able to maximize the active magnetic areas and, owing to the fact that it is moulded as a single body and therefore with an improved constructional precision, it is possible to reduce the air gaps between the rotor and the other components of the electric drive, with recovery of energy efficiency.

The rotor according to the invention is therefore simpler and cheaper to produce, while ensuring suitable performance features.

Further details may be obtained from the following description of non-limiting examples of embodiment of the invention, provided with reference to the accompanying drawings, in which:
Figure 1: shows a front perspective view of an example of a rotor according to the invention;
Figures 2a,2b: show a perspective view of the rotor according to Fig. 1, cross-sectioned along the plane indicated by II-II in Fig.3;
Figures 3a and 3b: show, respectively, a rear front view of the rotor according to Fig. 1 and a diagram of the arrangement of the magnetic poles of the field inside it;
Figure 4: shows a front end view of the rotor according to Fig.1;
Figure 5: shows a cross-sectional view along the plane indicated by V-V in Fig. 4;
Figure 6: shows a diagram illustrating operation of a Halbach magnet array, with a graph illustrating a part of the resultant magnetic field;
Figure 7: shows a graph illustrating the magnetic field measured at the centre of a magnetic pole of a rotor according to the invention;
Figure 8: shows a graph illustrating the magnetic field measured at the centre of a magnetic pole of a rotor according to the invention superimposed on the magnetic field measured at the centre of a magnetic pole of a corresponding rotor made according to the prior art with permanent magnets glued inside a metal cup;
Figure 9: shows a vertically sectioned view of a pump for recirculating the cooling fluid of a vehicle, with a movement transmission device with rotor according to the invention; and
Figure 10: shows a vertically sectioned view of a cooling fan with a movement transmission device with a rotor according to the invention.

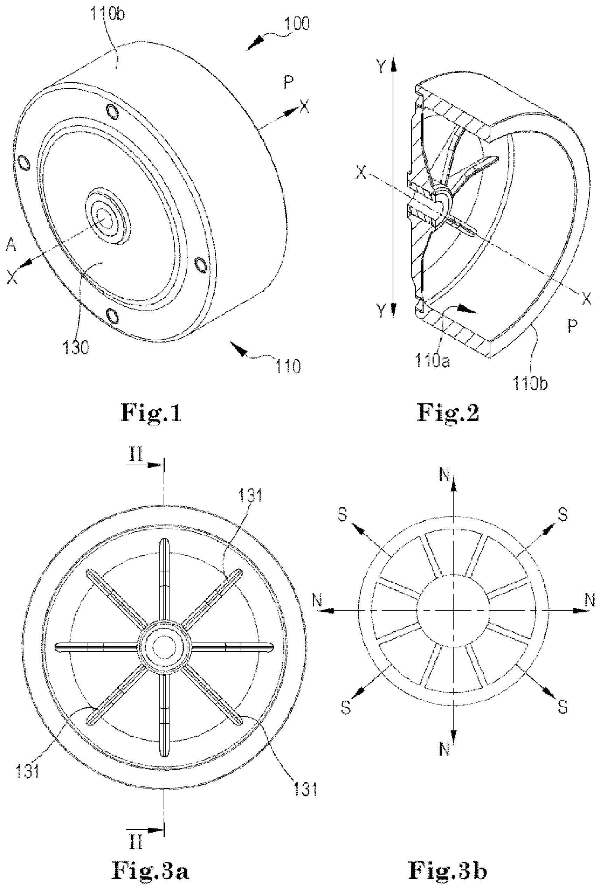

With reference to Figs. 1 and 2 and assuming a pair of reference axes, i.e. longitudinal axis X-X, corresponding to the rotation axis of the rotor and to the height of the respective cylindrical part, and vertical/radial axis Y-Y, perpendicular to the longitudinal axis and parallel to the plane of the front closing plate of the rotor, as well as a front part A corresponding to the closed side of the rotor and a rear part P opposite to the front part in the longitudinal direction and directed on an open side of the rotor, a first example of embodiment of an external rotor according to the invention comprises a body 100 which has a part 110 formed in the manner of a hollow cylinder extending around the longitudinal axis X-X and closed by a circular plate 130 at its front base.

The hollow cylinder 110 of the body 100 has an external circumferential surface 110b and an internal circumferential surface 110a and a height which coincides with the longitudinal axis X-X of the rotor. The external rotor is open at its rear base 100b of the hollow cylinder 110 so as to allow, during use in an electric drive system, the insertion inside it of at least one stator of the electric drive system.

According to the invention, the hollow cylinder 110 and the circular plate 130 are made as one piece from the same material consisting essentially of at least 80% by weight of a ferromagnetic metal, which can be magnetized in a permanent manner, and a remaining percentage of a plastic binder. For the purposes of the description this material will also be referred to as plastic-magnetic material.

The ferro-magnetic metal is preferably ferrite or neodymium, but a possible alternative is samarium cobalt. Of these, neodymium is preferred since it offers the best ferromagnetic performance and may be used in smaller concentrations. Ferrite instead is to be preferred when the manufacturing costs are to be kept low.

The plastic binder is preferably a polyamide, for example PA6, PA66, PA12 or PPS.

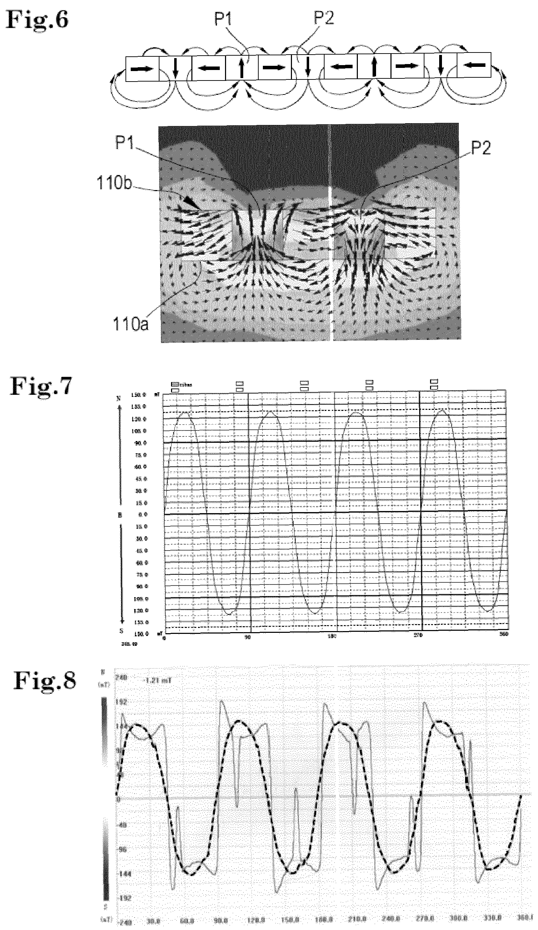

The hollow cylinder 110 of the rotor is magnetized so as to provide a Halbach array of permanent magnets which produces a permanent magnetic field of the rotor which has at least two magnetic poles in the volume on the inside of the surface of the hollow cylinder 110 and is substantially zero on the outside of the external surface 110b of the cylinder (also known as Halbach cylinder). This type of magnetization has the advantage of producing a magnetic field measured at the centre of the pole which resembles almost perfectly a sinusoid (Fig. 7) and is therefore able to compensate at least partly for the low magnetic performance of the plastic-magnetic material compared to the performance of the permanent magnets which are commonly used in external rotors, which instead produce a magnetic field, measured at the centre of the pole, which is comparable with a sinusoid or a square wave which have a deformed periodicity or form also owing to the interruptions between one magnet and another.

Preferably, the magnetic field inside the hollow cylinder 19 has a number of poles ≥2, ≥4, ≥6 or ≥8. The number of poles may also be greater and is variable depending on the size and the design of the rotor.

Preferably, the magnetic poles are arranged equally spaced along the circumferential extension of the internal volume of the cylinder.

As shown in Figure 3a, the internal rear surface of the closing plate 130 may have a plurality of raised ribs 130, in the example eight ribs, extending radially from the centre of the plate towards the outside, with a thickness in the axial direction towards the inside and arranged angularly equally spaced along the circumferential extension of the said surface, being designed to reinforce and increase the mechanical strength of the article. Although not strictly necessary, for the sake of constructional convenience it is preferable that there should be angular alignment between the ribs and the magnetic poles.

With reference to Figure 3b the arrangement of the magnetic poles of the field inside the hollow cylinder 110 of the rotor 100 is schematically shown; as can be seen, the preferred example of embodiment shown has a magnetic field with eight magnetic poles arranged alternately and angularly equally spaced along the circumferential extension inside the hollow cylinder 110. As can be seen, in this preferred embodiment, the ribs are angularly aligned with the poles along the circumferential extension of the plate 130.

According to preferred embodiments and owing to the constructional versatility of the rotor made of moulded plastic-magnetic material, it is also simple and inexpensive to magnetize the rotor for formation of a skew angle (inclination) of the poles of the motor. This solution simplifies and reduces the cost also of manufacture of the stator part of the electric drive and allows a rotary movement of the rotor which is not subject to sudden accelerations which penalize the uniformity and regularity of said movement.

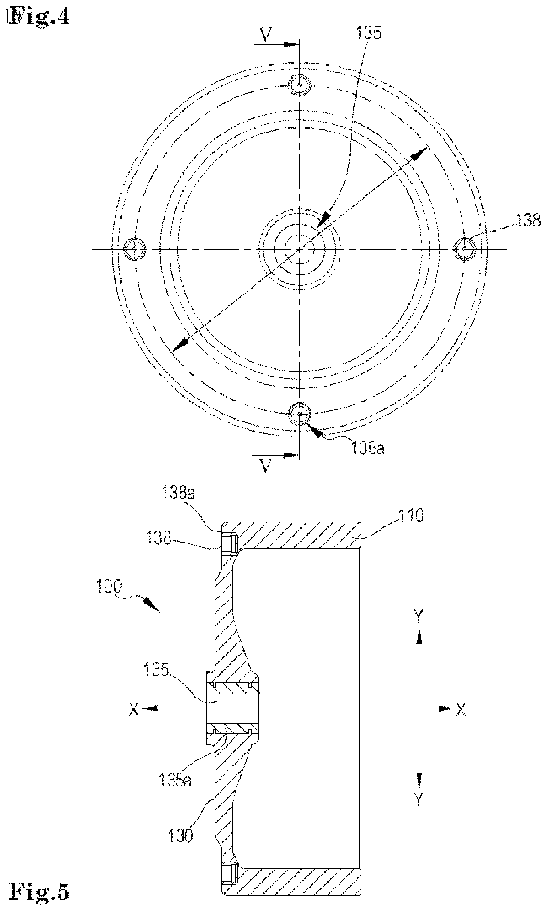

With reference to Figs. 2,4 and 5 it is preferable to form the body of the external rotor 100 with a central hole 135 passing through the plate 130, the hole being configured to house stably a metal bush 135a, or an alternative connecting means, which may be useful for example for the connection to other transmission and/or support elements such as a coaxial shaft.

According to a further preferred aspect, a plurality of holes 138 may be formed on the front end surface of the said plate 130, these being configured to house a respective bush 138a or an alternative fixing means. These holes 138 with bush 138a may be suitably arranged for example angularly equidistant along the circumferential extension of the front surface of the plate 130 so as to perform mechanical functions of supporting a member to be rotationally operated by means of the rotor, such as a cooling fan.

The position of the holes is preferably in the radially outer part of the plate 130, corresponding to the thickness of the hollow cylinder 110.

As will become clearer below, the incorporation of these holes and bushes in the single-piece body of the external rotor is particularly easy owing to the possibility of forming the same by means of moulding from injected plastic-magnetic material.

According to the method of the invention for forming the external rotor, the single-piece body 100 is injection-moulded from a preform of plastic-magnetic material, in particular obtained using granular compounds.

During moulding, magnetizing means, such as permanent magnets inside the mould, create the permanent magnetization of the hollow cylinder 110 alone, making it into anisotropic magnet.

The preform of plastic-magnetic material is obtained by mixing magnetic material in powder form, for example ferrite or neodymium (NdFeB) with a plastic binder, preferably consisting of PA6, PA66, PA12 or PPS.

From this mixed plastic-magnetic material it is possible to obtain the desired form of the external rotor by means of conventional injection-moulding processes. With moulding techniques of this type it is possible to achieve a high precision also in the case of large-size components and the incorporation of metal connecting inserts, such as bushes or pins, directly during moulding.

A further advantage of the method described is the versatility of magnetization of the rotor body, allowing both the partial and selective magnetization of only the desired parts (hollow cylinder) and a specific and predefined arrangement of the magnetic field, in particular as regards the axial and/or radial arrangement of multiple poles and any inclination (skewing) thereof.

Table 1 below shows some properties of preferred plastic-magnetic materials, obtained by mixing ferrite powder (93% by weight) with a respective plastic binder (7% by weight). A particularly preferred material for manufacture of the rotor according to the invention is indicated by the abbreviation I-CER 1812 in Table 1.

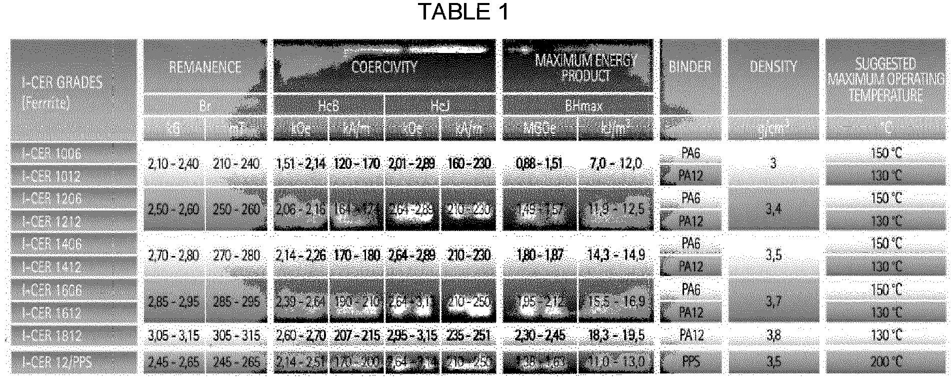

Table 2 below shows some properties of preferred plastic-magnetic materials, obtained by mixing neodymium powder with a respective plastic binder.

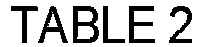

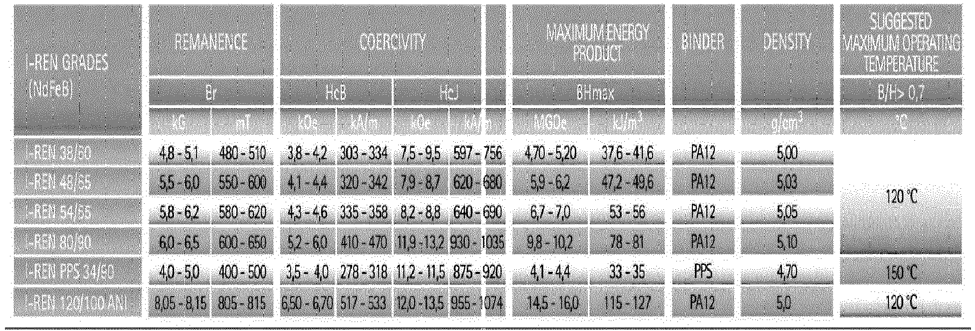

The materials in Tables 1 and 2 are commercially available from the company Cibas in Milan.

### EXAMPLE 1

An example of an external rotor of the invention was made with the structure shown in Figs. 1 to 5 from a plastic-magnetic material consisting of 93% by weight of ferrite and 7% of plastic binder PA12 and identified by the abbreviation I-CER 1812 in Table 1.

The external rotor was magnetized with Halbach type magnetization so as to have a permanent magnetic field inside the hollow cylinder 110 which has eight equally spaced magnetic poles, as shown in the right-hand part of Figure 3, inclined at a skew angle of 20°.

With reference to this preferred example of embodiment, some properties of the rotors of the present invention will now be discussed; it is understood that the characteristic features and advantages described with specific reference to this example may be applied to all the embodiments of a rotor according to the invention.

Fig. 6 shows in the top part a schematic representation of operation of a Halbach type magnetization of a rotor according to the invention, only five magnetic poles being schematically shown here. This type of magnetization may be schematically represented by an array of single magnets in which the magnetic flux of a magnet which forms a pole is concatenated with the flux of the magnets which are adjacent thereto and which capture the flux lines and transport them to the next pole, allowing the flux between magnetic poles to be closed without the need for external metal elements, with the result of a substantially zero magnetic field on the outside of the hollow cylinder body.

The bottom part of Figure 6 shows a graphical representation of the magnetic field around two adjacent poles of the external rotor according to the Example 1, corresponding to a related section of the hollow cylinder 110. As can be seen, on the outside of the external surface 110b of the cylinder, the magnetic field is substantially zero, while on the inside of the internal surface 110a of the cylinder 110, the magnetic field is well-defined with two poles P1 and P2 of opposite polarity.

Figure 7 shows the progression of the magnetic field measured in the centre of the rotor made with 8 magnetic poles.

As can be seen, the magnetic field at the centre of the pole resembles almost perfectly a pure sinusoid.

Figure 8 shows the progression of the magnetic field at the centre of the pole according to Figure 7 (broken line) superimposed on the progression of the magnetic field (continuous line) measured at the centre of a corresponding pole of an external rotor made according to the prior art with an external metal cup and permanent magnets glued inside the metal cup, so as to reproduce the magnetic and dimensional characteristics of the rotor according to Example 1.

The magnetic field with sinusoidal progression is more efficient from the point of view of the concatenation of the magnetic flux than that of the rotor according to the prior art, which resembles instead a square wave.

In addition, the high degree of precision obtained by manufacturing the rotor according to Figure 1 by means of moulding reduces the tolerances of the air gaps between external rotor and internal rotor of the electric drive. The combination of these two technical solutions is therefore such that it is possible to optimize the magnetic circuit compared to the permanent magnets used in the prior art and therefore use plastic-magnetic materials for the manufacture of external rotors of electric drives, said materials being generally considered to have a poor torque transmission efficiency, in particular at high temperatures.

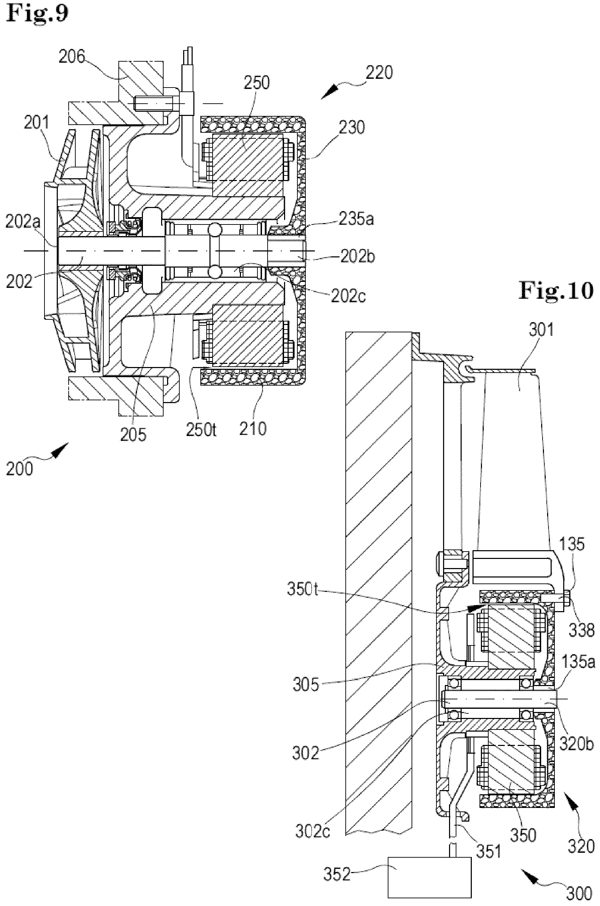

Figs. 9 and 10 show preferred examples of use of an external rotor in an electric motor for the rotational operation of a cooling device for a vehicle.

Figure 9 shows an example of a pump 200 for recirculating the cooling fluid of the internal combustion engine of a vehicle, in which the impeller 201 of the pump is rotationally driven by a spindle 202, a first end 202a of which is rigidly connected to the impeller 201 and the other end 202b of which, opposite to the first end in the axial/longitudinal direction X-X, is rigidly connected to the bush 235a of the plate 230 of a rotor 220 according to the invention, the hollow cylindrical part 210 of which is arranged in a radially external position with respect to the stator 250 of the electric drive of the pump 200.

With this configuration, by rotationally operating the external rotor 220 by means of the stator 250, the impeller 201 of the pump is rotationally driven by means of the spindle 202 rigidly connected to the external rotor, with a suitable number of rotations controlled by means of the power supply as required depending on the quantity of electric power at the stator.

Owing to the form of the rotor according to the invention it is possible to leave air gaps 250t between stator and rotor which are smaller than 1 mm, preferably smaller than or equal to 0.5 mm, enabling more efficient flux concatenation between stator and rotor with an increase in the useful torque transmitted to the rotor.

As can be seen, in the pump shown in Figure 9 the stator 250 is fixed on the outside of a sleeve 205 fixed to the base 206 of the motor, on the inside of which there is mounted the spindle 202 via bearings 202c which allow the spindle to remain idle with respect to the sleeve, for rotational driving, upon command, of the rotor.

As can been seen, the rotor is also arranged coaxially and concentrically on the outside of the stator 250, with the closing plate 230 of the rotor in an axially external and front position with respect to the stator 250. In turn, the stator and the rotor which form the electric drive are arranged in an axially external position with respect to the impeller of the pump 201.

Figure 10 shows an example of a fan for cooling the fluid in a radiator of a vehicle in which the fan 301 is rotationally driven by means of an electric driving device 300 comprising a rotor 320 according to the invention and a stator 350 arranged coaxially inside the rotor 320. As shown, the blades 301 of the fan may be supported directly on the rotor 320, for example by means of the holes 138 with bush 138a inside which respective screws 338 for fixing the blades to the rotor are fixed. The rotor is also supported on a shaft 302 by means of the bush 135a inside which the rear end 302b of the shaft 302 is fixed.

The shaft 302 is moreover supported on the inner race of a pair of bearings 302a, the outer race of which is keyed onto a sleeve 305 fixed to a part of the base of the motor. The stator 350 is moreover supported on the outer race of the sleeve 305.

With this configuration, by supplying electric power to the stator 350 by means of an electrical connection 351 and under the control of an electronic control unit 351, it is possible to rotationally drive the rotor 320 around the axis of the shaft 302 so as to operate the fan 301 with a desired speed generally controlled and decided by the control unit 352 on the basis of the actual cooling requirements of the engine.

In this case also, owing to the configuration of the rotor according to the invention, it is possible to leave air gaps 350t between stator and rotor equal to or less than 0.5 mm.

In some preferred applications, the single body made of plastic-magnetic material may also comprise a radial circumferential foot extending towards the inside or the outside of the open base end of the body and designed to allow easier connection to other components, for example coupling via an elastic plate to a fixing mount of a friction coupling.

It is therefore clear how the cooling device according to the invention provides a solution to the technical problem posed, owing to the single body formed by means of moulding from a suitable plastic-magnetic material and the particular magnetization of the body itself, said elements allowing high quantities of magnetic flux, and therefore torque, to be maintained, while resulting in simpler and more cost-effective production of the rotor.

Advantageously, the solution of a rotor moulded from plastic-magnetic material ensures a high degree of versatility and constructional simplicity for a plurality of configurational variants, with lower production costs, greater constructional precision and greater efficiency.

Although described in connection with a number of embodiments and a number of preferred examples of implementation of the invention, it is understood that the scope of protection of the present patent is determined solely by the claims below.

## Claims

1. Cooling device for a motor vehicle, comprising:
a sleeve (205;305) designed to be fixed, in use, to a base of the motor of the vehicle;
an electric drive system including a stator and an external rotor arranged coaxially around the stator, in a position radially on the outside thereof;
wherein the stator (250, 350) is fixed on the outside of the sleeve (205;305),
wherein the cooling device is: a cooling fan for cooling the fluid in a radiator of the motor vehicle, which includes a shaft (302) and blades (301) of the fan supported on the rotor (320); or a pump for recirculating a coolant or lubrication fluid of the motor vehicle which includes a spindle (202), a first end (202a) of which is rigidly connected to an impeller (201),
wherein the external rotor comprises a body, the body comprising a hollow cylinder (110) extending around a longitudinal axis and a circular plate (130), the hollow cylinder (110) being closed by the circular plate (130) at one of its two bases, wherein at least the hollow cylinder is magnetized with a Halbach magnetization which produces a permanent magnetic field of the rotor which has at least two magnetic poles in the internal volume of the hollow cylinder and is substantially zero on the outside thereof,
wherein said body of the external rotor is formed as a single moulded piece of a same plastic-magnetic material essentially consisting of a plastic binder and at least 80% by weight of a ferromagnetic metal which can be permanently magnetized, and
wherein an air gap (250t) between the rotor and the stator has a length in the radial direction less than 1 mm, the spindle or shaft is rotationally mounted inside the sleeve (205;305) via bearings (202c;302a) and the circular plate (130) has a central through-hole (135) which stably houses a connecting element (135a, 235a) rigidly connected to one end of the shaft (302) or to a second end of the spindle (202).

2. Cooling device according to Claim 1, wherein the ferromagnetic metal is ferrite, neodymium or samarium cobalt, preferably neodymium or ferrite.

3. Cooling device according to Claim 1 or 2, wherein the plastic binder is a polyamide, preferably PA6, PA12, PA66 or PPS.

4. Cooling device according to one of the preceding claims, wherein the plastic-magnetic material comprises at least 90%, more preferably at least 93%, 95% or 99% by weight of magnetic material, in particular ferrite or neodymium.

5. Cooling device according to one of the preceding claims, **characterized in that** the single-piece body is injection-moulded, preferably from a preform of plastic-magnetic material.

6. Cooling device according to one of the preceding claims, **characterized in that** the rotor body is magnetized so that the magnetic field inside the hollow cylinder (110) has at least 2, at least 4 or at least 8 magnetic poles arranged angularly equidistant on the circumferential extension of the internal volume of the cylinder.

7. Cooling device according to one of the preceding claims, **characterized in that** the inner rear surface of the closing plate (130) has a plurality of raised ribs (131) extending radially from the inside towards the outside of the plate.

8. Cooling device according to one of the preceding claims, **characterized in that** the at least two magnetic poles of the rotor field are skewed at a predefined skew angle.

9. Cooling device according to one of the preceding claims, **characterized in that** it the connecting element is a metal bush (135a, 235a) and/or **in that** the circular plate (130) has a plurality of holes (138) formed on its front end surface which are configured to house a respective connecting element, in particular a respective bush (138a), preferably arranged angularly equidistant on the circumferential extension of the front surface of the plate (130), for providing a mechanical coupling which supports a member to be rotationally operated by means of the rotor.

10. Cooling device according to one of the preceding claims, wherein the external rotor is arranged concentrically around the stator.

11. Cooling device according to one of the preceding claims, wherein the air gap between rotor and stator has a length in the radial direction less than or equal to 0.5 mm.

12. Method for forming a cooling device according to one of Claims 1 to 11, comprising the following steps:
- preparing a preform, for example a ball, of a plastic-magnetic material essentially consisting of at least 80% by weight of a permanently magnetizable metal and a plastic binder;
- moulding, preferably by means of injection, the preform inside a mould so as to form a single rotor body comprising a hollow cylinder (110) extending around a longitudinal axis and a circular plate (130) with a central through-hole (135), the hollow cylinder (110) being closed by the circular plate (130) at one of its two bases;
- magnetization of at least the hollow cylinder of the rotor body so as to provide a Halbach array which produces a permanent magnetic field of the rotor which has at least two magnetic poles in the internal volume of the hollow cylinder and is substantially zero on the outside thereof;
- stably housing a connecting element (135a, 235a) in the central hole of the circular plate (130);
- providing a sleeve (205;305) designed to be fixed, in use, to a base of the motor of the vehicle;
- providing a shaft (302) or a spindle (202);
- forming an electric drive system including a stator and an external rotor arranged coaxially around the stator, in a position radially on the outside thereof;
wherein the stator (250, 350) is fixed on the outside of the sleeve (205;305), the external rotor comprises said rotor body, one end of the shaft (302) or spindle (202) is rigidly connected to the connecting element (135a, 235a), the spindle or shaft is rotationally mounted inside the sleeve (205;305) via bearings (202c;302a) and an air gap between the rotor and the stator has a length in the radial direction less than 1 mm.

13. Method according to the preceding claim, wherein the plastic-magnetic material comprises at least 90%, more preferably at least 93%, 95% or 99% by weight of magnetic material, in particular ferrite or neodymium or samarium cobalt.

14. Method according to Claim 12 or 13, wherein the plastic binder is a polyamide, preferably PA6, PA12, PA66 or PPS.

## Patentansprüche

1. Kühlvorrichtung für ein Kraftfahrzeug, umfassend:
eine Hülse (205; 305), die im Gebrauch an einer Basis des Motors des Fahrzeugs befestigt werden soll;
ein elektrisches Antriebssystem, das einen Stator und einen Außenläufer umfasst, wobei der Außenläufer koaxial um den Stator herum und radial außerhalb desselben angeordnet ist;
wobei der Stator (250, 350) an der Außenseite der Hülse (205; 305) befestigt ist,
wobei die Kühlvorrichtung ist:
ein Kühlventilator zum Kühlen der Flüssigkeit in einem Kühler des Kraftfahrzeugs, der eine Welle (302) und auf dem Rotor (320) abgestützte Lüfterblätter (301) umfasst; oder
eine Pumpe zum Umwälzen eines Kühlmittels oder Schmiermittels des Kraftfahrzeugs, die eine Spindel (202) umfasst, deren erstes Ende (202a) starr mit einem Laufrad (201) verbunden ist,
wobei der Außenläufer einen Körper umfasst, wobei der Körper einen Hohlzylinder (110) umfasst, der sich um eine Längsachse erstreckt, sowie eine kreisförmige Platte (130), wobei der Hohlzylinder (110) an einer seiner beiden Stirnseiten durch die kreisförmige Platte (130) verschlossen ist, wobei zumindest der Hohlzylinder mit einer Halbach-Magnetisierung magnetisiert ist, die ein permanentes Magnetfeld des Rotors erzeugt, das im Innenvolumen des Hohlzylinders mindestens zwei magnetische Pole aufweist und außerhalb desselben im Wesentlichen Null ist,
wobei der Körper des Außenläufers als einstückiges, geformtes Teil aus demselben Kunststoff-Magnet-Material ausgebildet ist, das im Wesentlichen aus einem Kunststoffbinder und mindestens 80 Gew.-% eines ferromagnetischen Metalls besteht, das dauerhaft magnetisierbar ist, und
wobei ein Luftspalt (250t) zwischen Rotor und Stator in radialer Richtung eine Länge von weniger als 1 mm aufweist, wobei die Spindel oder die Welle innerhalb der Hülse (205; 305) über Lager (202c; 302a) drehbar gelagert ist und wobei die kreisförmige Platte (130) eine zentrale Durchgangsöffnung (135) aufweist, in der stabil ein Verbindungselement (135a, 235a) aufgenommen ist, das starr mit einem Ende der Welle (302) oder mit einem zweiten Ende der Spindel (202) verbunden ist.

2. Kühlvorrichtung nach Anspruch 1, wobei das ferromagnetische Metall Ferrit, Neodym oder Samarium-Kobalt ist, vorzugsweise Neodym oder Ferrit.

3. Kühlvorrichtung nach Anspruch 1 oder 2, wobei der Kunststoffbinder ein Polyamid ist, vorzugsweise PA6, PA12, PA66 oder PPS.

4. Kühlvorrichtung nach einem der vorhergehenden Ansprüche, wobei das Kunststoff-Magnet-Material mindestens 90 Gew.-%, vorzugsweise mindestens 93 %, 95 % oder 99 Gew.-% magnetisches Material, insbesondere Ferrit oder Neodym, umfasst.

5. Kühlvorrichtung nach einem der vorhergehenden Ansprüche, **dadurch gekennzeichnet, dass** der einstückige Körper spritzgegossen ist, vorzugsweise aus einer Vorform des Kunststoff-Magnet-Materials.

6. Kühlvorrichtung nach einem der vorhergehenden Ansprüche, **dadurch gekennzeichnet, dass** der Rotorkörper so magnetisiert ist, dass das Magnetfeld innerhalb des Hohlzylinders (110) mindestens 2, mindestens 4 oder mindestens 8 magnetische Pole aufweist, die über den Umfang des Innenvolumens des Zylinders winkelgleich verteilt angeordnet sind.

7. Kühlvorrichtung nach einem der vorhergehenden Ansprüche, **dadurch gekennzeichnet, dass** die innere Rückseite der Verschlussplatte (130) eine Mehrzahl erhabener Rippen (131) aufweist, die sich radial von innen nach außen über die Platte erstrecken.

8. Kühlvorrichtung nach einem der vorhergehenden Ansprüche, **dadurch gekennzeichnet, dass** die mindestens zwei magnetischen Pole des Rotorfeldes um einen vorgegebenen Schrägwinkel versetzt sind.

9. Kühlvorrichtung nach einem der vorhergehenden Ansprüche, **dadurch gekennzeichnet, dass** das Verbindungselement eine Metallbuchse (135a, 235a) ist und/oder dass die kreisförmige Platte (130) an ihrer vorderen Stirnfläche eine Mehrzahl von Öffnungen (138) aufweist, die jeweils zur Aufnahme eines entsprechenden Verbindungselements, insbesondere einer jeweiligen Buchse (138a), ausgebildet sind, vorzugsweise winkelgleich über den Umfang der Vorderfläche der Platte (130) verteilt, um eine mechanische Kupplung bereitzustellen, die ein durch den Rotor drehend anzutreibendes Bauteil trägt.

10. Kühlvorrichtung nach einem der vorhergehenden Ansprüche, wobei der Außenläufer konzentrisch um den Stator angeordnet ist.

11. Kühlvorrichtung nach einem der vorhergehenden Ansprüche, wobei der Luftspalt zwischen Rotor und Stator in radialer Richtung eine Länge von kleiner oder gleich 0,5 mm aufweist.

12. Verfahren zur Herstellung einer Kühlvorrichtung nach einem der Ansprüche 1 bis 11, umfassend die folgenden Schritte:
Bereitstellen einer Vorform, beispielsweise einer Kugel, aus einem Kunststoff-Magnet-Material, das im Wesentlichen aus mindestens 80 Gew.-% eines dauerhaft magnetisierbaren Metalls und einem Kunststoffbinder besteht;
Formen, vorzugsweise mittels Spritzgießen, der Vorform innerhalb einer Form zur Ausbildung eines einstückigen Rotorkörpers, der einen Hohlzylinder (110) umfasst, der sich um eine Längsachse erstreckt, sowie eine kreisförmige Platte (130) mit einer zentralen Durchgangsöffnung (135), wobei der Hohlzylinder (110) an einer seiner beiden Stirnseiten durch die kreisförmige Platte (130) verschlossen ist;
Magnetisierung zumindest des Hohlzylinders des Rotorkörpers zur Ausbildung einer Halbach-Anordnung, die ein permanentes Magnetfeld des Rotors erzeugt, das im Innenvolumen des Hohlzylinders mindestens zwei magnetische Pole aufweist und außerhalb desselben im Wesentlichen Null ist;
stabiles Einsetzen eines Verbindungselements (135a, 235a) in die zentrale Öffnung der kreisförmigen Platte (130);
Bereitstellen einer Hülse (205; 305), die im Gebrauch an einer Basis des Motors des Fahrzeugs befestigt werden soll;
Bereitstellen einer Welle (302) oder einer Spindel (202);
Ausbilden eines elektrischen Antriebssystems, das einen Stator und einen Außenläufer umfasst, wobei der Außenläufer koaxial um den Stator herum und radial außerhalb desselben angeordnet ist;
wobei der Stator (250, 350) an der Außenseite der Hülse (205; 305) befestigt ist, der Außenläufer den genannten Rotorkörper umfasst, ein Ende der Welle (302) oder der Spindel (202) starr mit dem Verbindungselement (135a, 235a) verbunden ist, die Spindel oder die Welle innerhalb der Hülse (205; 305) über Lager (202c; 302a) drehbar gelagert ist und ein Luftspalt zwischen Rotor und Stator in radialer Richtung eine Länge von weniger als 1 mm aufweist.

13. Verfahren nach dem vorhergehenden Anspruch, wobei das Kunststoff-Magnet-Material mindestens 90 Gew.-%, vorzugsweise mindestens 93 %, 95 % oder 99 Gew.-% magnetisches Material, insbesondere Ferrit oder Neodym oder Samarium-Kobalt, umfasst.

14. Verfahren nach Anspruch 12 oder 13, wobei der Kunststoffbinder ein Polyamid ist, vorzugsweise PA6, PA12, PA66 oder PPS.

## Revendications

1. Dispositif de refroidissement pour un véhicule moteur, comprenant:
un manchon (205;305) conçu pour être fixé, lors de son utilisation, à une base du moteur du véhicule;
un système d'entraînement électrique comprenant un stator et un rotor extérieur disposé co-axialement autour du stator, en une position radiale sur l'extérieur de celui-ci;
dans lequel le stator (250, 350) est fixé sur l'extérieur du manchon (205;305),
dans lequel le dispositif de refroidissement est: un ventilateur de refroidissement pour refroidir le fluide dans un radiateur du véhicule moteur, qui comprend un arbre (302) et des ailettes (301) du ventilateur supportés par le rotor (320); ou une pompe de circulation d'un fluide de refroidissement ou de lubrification du véhicule moteur qui comprend une tige (202), une première extrémité (202a) de laquelle étant connectée de manière solidaire à une turbine (201),
dans lequel le rotor extérieur comprend un corps, le corps comprenant un cylindre creux (110) s'étendant autour d'un axe longitudinal et un plateau circulaire (130), le cylindre creux (110) étant fermé par le plateau circulaire (130) à une de ses deux bases, dans lequel au moins le cylindre creux est magnétisé avec une magnétisation de Halbach qui produit un champ magnétique permanent du rotor qui présente au moins deux pôles magnétiques dans le volume interne du cylindre creux et est sensiblement nul sur l'extérieur de celui-ci,
dans lequel ledit corps du rotor extérieur est formé en tant que pièce moulée mono-bloc d'un même matériau magnétique plastique constitué essentiellement d'un liant plastique et d'au moins 80% en poids d'un métal ferromagnétique qui peut être magnétisé de manière permanente, et
dans lequel un espace d'air (250t) entre le rotor et le stator a une longueur en direction radiale de moins de 1 mm, la tige ou l'arbre est monté à rotation à l'intérieur du manchon (205;305) via des roulements (202c;302a) et la plaque circulaire (130)a un trou traversant central (135) qui reçoit de manière stable un élément de connexion (135a,235a) connecté de manière solidaire à une extrémité de l'arbre (302) ou à la deuxième extrémité de la tige (202).

2. Dispositif de refroidissement selon la revendication 1, dans lequel le métal ferromagnétique est de la ferrite, du néodyme ou du samarium-cobalt, de préférence du néodyme ou de la ferrite.

3. Dispositif de refroidissement selon la revendication 1 ou 2, dans lequel le liant plastique est un polyamide, de préférence PA6, PA12, PA66 ou PPS.

4. Dispositif de refroidissement selon l'une des revendications précédentes, dans lequel le matériau magnétique plastique comprend au moins 90 %, de manière préférentielle au moins 93 %, 95 % ou 99 % en poids de matériau magnétique, en particulier de la ferrite ou du néodyme.

5. Dispositif de refroidissement selon l'une des revendications précédentes, **caractérisé en ce que** le corps monobloc est moulé par injection, de préférence à partir d'une préforme en matériau magnétique plastique.

6. Dispositif de refroidissement selon l'une des revendications précédentes, **caractérisé en ce que** le corps du rotor est magnétisé de sorte que le champ magnétique à l'intérieur du cylindre creux (110) possède au moins 2, au moins 4 ou au moins 8 pôles magnétiques disposés angulairement à égale distance sur l'extension circonférentielle du volume interne du cylindre.

7. Dispositif de refroidissement selon l'une des revendications précédentes, **caractérisé en ce que** la surface arrière intérieure de la plaque de fermeture (130) comporte une pluralité de nervures surélevées (131) s'étendant radialement de l'intérieur vers l'extérieur de la plaque.

8. Dispositif de refroidissement selon l'une des revendications précédentes, **caractérisé en ce que** les au moins deux pôles magnétiques du champ du rotor sont inclinés d'un angle prédéfini.

9. Dispositif de refroidissement selon l'une des revendications précédentes, **caractérisé en ce que** l'élément de connexion est une bague (135a,235a) et/ou **en ce que** la plaque (130) comporte une pluralité de trous (138) formés sur sa surface d'extrémité avant qui sont configurés pour loger un élément de liaison respectif, notamment une bague respectif (138a), de préférence disposés de manière angulairement équidistante sur l'extension circonférentielle de la surface avant de la plaque (130), pour fournir un couplage mécanique capable de supporter un élément à actionner en rotation au moyen du rotor.

10. Dispositif de refroidissement selon l'une des revendications précédentes, dans lequel le rotor extérieur est disposé de manière concentrique autour du stator.

11. Dispositif de refroidissement selon l'une des revendications précédentes, dans lequel l'espace d'air entre le rotor et le stator a une longueur dans la direction radiale de moins de ou égale à 0,5 mm.

12. Procédé de formation d'un dispositif de refroidissement selon l'une des revendications 1 à 11, comprenant les étapes suivantes :
- la préparation d'une préforme, par exemple une bille, en un matériau magnétique plastique composé essentiellement d'au moins 80 % en poids d'un métal magnétisable de façon permanente et d'un liant plastique ;
- moulage, de préférence par injection, de la préforme à l'intérieur d'un moule afin de former un corps de rotor mono-bloc comprenant un cylindre creux (110) s'étendant autour d'un axe longitudinal et une plaque circulaire (130) avec un trou traversant central (135), le cylindre creux (110) étant fermé par la plaque circulaire (130) à l'une de ses deux bases ;
- magnétisation au moins du cylindre creux du corps de manière à fournir un réseau de Halbach qui produit un champ magnétique permanent du rotor qui a au moins deux pôles magnétiques dans le volume interne du cylindre creux et est sensiblement nul à l'extérieur de celui-ci;
- logement stable d'un élément de connexion (135a,235a) dans le trou central de la plaque circulaire (130);
- fournir un arbre (302) ou une tige (202);
- former un système d'entraînement électrique comprenant un stator et un rotor externe disposé co-axialement autour du stator, dans une position radiale sur l'extérieur de celui-ci;
dans lequel
le stator (250,350) est fixé sur l'extérieur du manchon (205,305), le rotor extérieur comprend ledit corps de rotor, une extrémité de l'arbre (302) ou la tige (202) étant connectée de manière solidaire à l'élément de connexion (135a,235a),
la tige ou l'arbre est monté à rotation à l'intérieur du manchon (205;305) via des roulements (202c;302a) et un espace d'air entre le rotor et le stator a une longueur en direction radiale de moins de 1 mm.

13. Procédé selon la revendication précédente, dans lequel le matériau magnétique plastique comprend au moins 90 %, plus préférentiellement au moins 93 %, 95 % ou 99 % en poids de matériau magnétique, en particulier de ferrite ou du néodyme ou du samarium-cobalt.

14. Procédé selon la revendication 12 ou 13, dans lequel le liant plastique est un polyamide, de préférence PA6, PA12, PA66 ou PPS.
